# EUROPÄISCHE PATENTANMELDUNG

(11) **EP 3 766 653 A1**
(43) Veröffentlichungstag der Anmeldung: **20.01.2021**
(21) Anmeldenummer: 20186089.7
(22) Anmeldetag: 15.07.2020
(51) Int. Cl.: B29C 45/00, B29C 45/14

(54) **VORRICHTUNG UND VERFAHREN ZUR ERZEUGUNG EINES SPRITZOBJEKTS**

(30) Priorität: 19.07.2019 CH 9232019
(71) Anmelder: Rotho Kunststoff AG, 5303 Würenlingen (CH)
(72) Erfinder: Ernst, Andreas, 5454 Bellikon (CH); Ölmez, Ömer, 5505 Brunegg (CH)
(74) Vertreter: IPrime Rentsch Kaelin AG

(57) **Zusammenfassung**

Die vorliegende Erfindung betrifft eine Vorrichtung zur Erzeugung eines Spritzobjektes. Insbesondere betrifft sie eine Vorrichtung zur Erzeugung eines im Wesentlichen vollständig rezyklierbaren Spritzobjektes mit wenigsten teilweise metallischer Optik. Die Vorrichtung umfasst eine Matrize (2), welche im Wesentlichen der Aussenform des Spritzobjektes entspricht. Sie umfasst weiter einen Stempel (3) zum Verschliessen der Matrize (2) und wobei der Stempel im Wesentlichen der Innenform des Spritzobjektes entspricht. Weiter umfasst sie einen Greifer (5) zur Bestückung der Matrize (2) mit einer Folie. Bevorzugt handelt es sich bei der Folie um eine einen metallischen Glanz aufweisende Folie, die insbesondere im Wesentlichen frei von Metallen ist.

Ein Ladungsvermittler bringt eine elektrostatische Ladung auf mindestens einer Seite der Folie auf und die Vorrichtung einen Wirkungsbereich A umfasst und der Ladungsvermittler derart angeordnet ist, dass die elektrostatische Ladung auf die Folie innerhalb des Wirkungsbereichs aufgebracht wird. Die Erfindung betrifft weiter ein entsprechendes Verfahren und eine Verwendung einer Folie.

## Beschreibung

Die vorliegende Erfindung betrifft eine Vorrichtung zur Erzeugung eines Spritzobjekts, insbesondere eines im Wesentlichen vollständig rezyklierbaren Spritzobjekts mit wenigstens teilweiser metallischer Optik. Weiter betrifft die vorliegende Erfindung ein Verfahren zur Herstellung eines Spritzobjekts insbesondere mit Metalloptik, sowie die Verwendung einer dielektrischen Folie, alles gemäss den Oberbegriffen der unabhängigen Ansprüche.

### Technologischer Hintergrund

Bei den erfindungsgemässen Spritzobjekten handelt es sich bevorzugt um hinterspritzte Formteile. Solche hinterspritzten Formteile sind gängigerweise Verbundformteile, welche aufgrund von Anforderungen an die Optik, Haptik oder anderer von der Oberflächenbeschaffenheit abhängiger Eigenschaften zusammengesetzt sind aus einem Trägermaterial mit bestimmten Eigenschaften und mindestens einem Schichtmaterial, welches für die gewünschten Eigenschaften verantwortlich ist. Das Schichtmaterial wird in der Regel aussen am Spritzobjekt zu liegen kommen, d.h. wird mindestens teilweise eine Oberfläche des Spritzobjekts bilden.

Im Bereich der häufig im Haushaltsbereich verwendeten Kunststoffprodukte besteht vonseiten der Konsumenten ein Bedarf nach Objekten mit einer ansprechenden Optik und/oder Haptik. Beliebt sind insbesondere Kunststoffobjekte für den Haushaltsgebrauch, welche mindestens teilweise eine metallische Optik aufweisen.

So sind beispielsweise Abfalleimer oder Brotboxen bekannt, welche hauptsächlich aus Kunststoff bestehen und als Spritzobjekt gefertigt werden, aber an ihren Oberflächen mit metallischen Folien versehen sind, sodass der optische und/oder haptische Eindruck eines metallenen Objekts entsteht. Häufig werden solche Folien verwendet, die dem Spritzobjekt einen Chromglanz und/oder einen Aluglanz verleihen.

Für die spritzgusstechnische Herstellung werden diese Folien in der Regel aus einem metallischen Schichtmaterial mit einer oder mehrerer Kunststofflagen hergestellt, welche in die Spritzgussform zur Erzeugung des Spritzobjekts eingelegt werden und anschliessend durch einen Spritzguss mit einem thermoplastischen Trägermaterial hinterspritzt werden.

Eine besondere Herausforderung stellen dabei die korrekte Positionierung und Halterung der Folie in der Spritzgussvorrichtung dar. In bekannten Herstellungsverfahren werden die Folien u.a. mittels einer Ansaugung z.B. durch Luftsauger und/oder durch elektrostatische Kräfte gehalten.

Das Aufbringen einer elektrostatischen Ladung in einer Betriebsumgebung einer Spritzgussvorrichtung ist allerdings mit Schwierigkeiten verbunden.

Die WO 2008/062396 befasst sich mit einer Vorrichtung und einem Verfahren zum Aufbringen einer elektrostatischen Ladung auf eine metallische Komponenten enthaltende Folie in einem Spritzgussverfahren, bei dem die besagte Folie mit einem Trägermaterial hinterspritzt wird. Das gezeigte Verfahren sieht vor, dass die Folie mit einer dielektrischen äusseren Schicht beschichtet wird. Diese äussere Schicht wird mit einer elektrostatischen Ladung beaufschlagt. Dieses Dokument schlägt vor, die mit dem Aufbringen der elektrostatischen Ladung im Bereich der Spritzgussmaschinen auftretenden Probleme dahingehend zu umgehen, dass die besagte elektrostatische Ladung ausserhalb der Form aufgebracht wird.

Ein Nachteil dieses Verfahrens ist, dass ein Intervall besteht zwischen dem Aufbringen der Ladung und dem Platzieren der Folie in der Spritzgussform. Zudem muss die gesamte Vorrichtung raumfüllender ausgestaltet werden, indem eine ausserhalb der Form befindliche Ladungsübertragungseinheit erforderlich ist.

Es besteht somit ein Bedürfnis, Verfahren und Vorrichtungen der eingangs genannten Art bereitzustellen, die die Erzeugung von Spritzobjekten mit wenigstens teilweiser metallischer Optik ermöglichen, die einfach in der Ausgestaltung sind und mindestens einen Nachteil des Bekannten überwinden.

Es ist somit eine Aufgabe der vorliegenden Erfindung, mindestens einen Nachteil des Bekannten zu überwinden. Insbesondere ist es eine Aufgabe der vorliegenden Erfindung, eine Vorrichtung, ein Verfahren und eine Verwendung einer einen metallischen Glanz aufweisenden Folie bereitzustellen, die es ermöglichen, Spritzobjekte auf eine effiziente und ökonomische Art herzustellen.

Weiter insbesondere sollen eine entsprechende Vorrichtung, ein Verfahren und eine Verwendung bereitgestellt werden, bei der ein im Wesentlichen vollständig rezyklierbares Spritzobjekt mit wenigstens teilweiser metallischer Optik in einem effizienten Verfahren erzeugt werden kann.

### Darstellung der Erfindung

Diese Aufgabe ist durch eine Vorrichtung und ein Verfahren, sowie eine Verwendung gemäss kennzeichnendem Teil der unabhängigen Ansprüche gelöst.

Ein Aspekt der vorliegenden Erfindung betrifft eine Vorrichtung zur Erzeugung eines Spritzobjekts. Die Vorrichtung umfasst eine Matrize, welche im Wesentlichen einer Aussenform des Spritzobjekts entspricht. Sie umfasst weiter einen Stempel zum Verschliessen der Matrize, wobei der Stempel in einer besonderen Ausführungsform im Wesentlichen der Innenform des Spritzobjekts entsprechen kann. Die erfindungsgemässe Vorrichtung umfasst weiter einen Greifer zu Bestückung der Matrize mit einer dielektrischen, einen metallischen Glanz aufweisenden Folie. Weiter umfasst die erfindungsgemässe Vorrichtung einen Ladungsvermittler zur Aufbringung einer elektrostatischen Ladung auf mindestens einer Seite der dielektrischen, einen metallischen Glanz aufweisenden Folie. Die Vorrichtung umfasst einen Wirkungsbereich, und der Ladungsvermittler ist derart angeordnet, dass die elektrostatische Ladung innerhalb des Wirkungsbereichs auf die dielektrische, einen metallischen Glanz aufweisenden Folie aufgebracht wird.

In einer besonderen Ausführungsform betrifft die Erfindung eine Vorrichtung zur Erzeugung eines Spritzobjektes, das als Gebrauchsgut Verwendung findet. Besonders bevorzugt handelt es sich dabei um im Haushalt verwendete Gebrauchsgüter, welche im Wesentlichen aus Kunststoff bestehen, wie z.B. Behälter, Eimer, Kästen etc.

Im Sinne der vorliegenden Erfindung kann die Matrize zur Aufnahme einer dielektrischen, einen metallischen Glanz aufweisenden Folie ausgestaltet sein.

Im Sinne der vorliegenden Erfindung kann ein der Matrize gegenüberliegend angeordneter Stempel ausgebildet sein, um beim Verschliessen der Matrize einen Hohlraum zu bilden, der beim Hinterspritzen mit dem entsprechenden Trägermaterial befüllt werden kann.

In einer besonderen Ausführungsform handelt es sich bei den Spritzobjekten um Verbundformteile, welche aus einem Trägermaterial bestehen und mindestens eine einen metallischen Glanz aufweisende dielektrische Folie umfassen. Bevorzugt ist diese Folie so am Verbundformteil vorgesehen, dass eine Aussenschicht des Verbundformteils eine wenigstens teilweise metallische Optik umfasst.

Besonders bevorzugt ist das Spritzobjekt im Wesentlichen vollständig rezyklierbar. Im Sinne der vorliegenden Erfindung kann unter im Wesentlichen vollständig rezyklierbar verstanden werden, dass mit dem Spritzobjekt allfällig später verbundene Teile von der Rezyklierbarkeit ausgenommen werden. So kann zum Beispiel bei einem Spritzobjekt, welches mittels einer Verbindung mit anderen Teilen montiert wird, z.B. verschraubt, nach Entfernen der Schrauben als im Wesentlichen rezyklierbar verstanden werden. Ebenso von der Rezyklierbarkeit ausgenommen sein können funktionelle Elemente, die am Spritzobjekt montiert werden wie z.B. Scharnieren, Schlösser etc.

In einer besonderen Ausführungsform sind Stempel und Matrize zueinander bewegbar ausgestaltet. Die Bewegbarkeit kann beispielsweise über mindestens einen Aktuator gewährleistet sein, zum Beispiel einen Linearaktuator.

In einer weiteren besonderen Ausführungsform ist der Greifer in und aus dem Wirkungsbereich bewegbar ausgestaltet. Dazu kann der Greifer zum Beispiel über einen Drehpunkt schwenkbar ausgestaltet sein, so dass er in und aus dem Wirkungsbereich bewegbar ist. In einer weiteren besonderen Ausführungsform ist der Greifer als Werkzeug an einem mehrachsigen als Roboterarm ausgebildeten Transportarm ausgebildet. Besonders bevorzugt handelt es sich beim Roboterarm um ein einen sechs-achs Roboterarm. Ein solcher sechs-achs Roboterarm gestattet es u.A. den gesamten Wirkungsbereich als Arbeitsbereich zu bedienen.

In einer besonderen Ausführungsform ist die dielektrische, einen metallischen Glanz aufweisende Folie im Wesentlichen frei von Metallen. Im Sinne der vorliegenden Erfindung kann im Wesentlichen frei von Metallen z.B. verstanden werden als Folie die erhältlich ist, ohne dass metallische Additive im Kunststoff-Masterbatch hinzugefügt werden. Bevorzugt handelt es sich bei der Folie um eine Folie aus einem dielektrischen Kunststoff.

In einer besonderen Ausführungsform kann als Wirkungsbereich ein Bereich innerhalb der Vorrichtung verstanden werden, in dem sich bewegbare Maschinenelemente wie z.B. Matrize und/oder Stempel bewegen können. Mit anderen Worten kann als Wirkungsbereich, der bei einer Bewegung zwischen Matrize und/oder Stempel überwundene Raum zwischen diesen beiden Elementen verstanden werden.

In einer besonderen Ausführungsform umfasst die Vorrichtung einen Transportarm zur Bewegung des Greifers und/oder des Ladungsvermittlers in- und aus dem Wirkungsbereich.

Der Transportarm kann in einem einfachen Beispiel als Roboterarm ausgestaltet sein, welcher mittels eines Antriebs in- und aus dem Wirkungsbereich in einer linearen Bewegung hinein-, resp. hinausbewegt werden kann. Alternativ und/oder ergänzend kann der Transportarm mittels eines Kugelgelenks oder mittels eines Lasthebels in und aus dem Wirkungsbereich bewegt werden.

In einer besonderen Ausführungsform umfasst der Greifer Ansaugöffnungen zum Ansaugen und/oder Halten von einzelnen oder mehreren dielektrischen, einen metallischen Glanz aufweisenden Folien. Diese Ansaugöffnungen können in einer weiteren besonderen Ausführungsform mit Luftkanälen verbunden sein, welche über einen Kompressor angetrieben als Vakuumsauggreifer betreibbar sind. In einer dazu alternativen Ausführungsform ist der Vakuumgreifer als Bernoulli-Greifer ausgestaltet.

In einer besonderen Ausführungsform definiert der Wirkungsbereich einen Zwischenraum zwischen der Matrize und dem Stempel in geöffnetem Zustand. Im Sinne der vorliegenden Erfindung kann der geöffnete Zustand als ein Zustand verstanden werden, in dem die Matrize und der Stempel voneinander beabstandet sind. Im Gegensatz dazu kann als der geschlossene Zustand der Zustand angesehen werden, in dem Matrize und Stempel miteinander derart in Wirkverbindung treten, dass der zu hinterspritzende Hohlraum gebildet wird und im Wesentlichen abgeschlossen ist. Im Sinne der vorliegenden Erfindung entspricht ein geöffneter Zustand einem zugänglichen Wirkungsbereich. In den zugänglichen Wirkungsbereich können Greifer und Ladungsvermittler eingreifen, um ihre entsprechenden Operationen durchzuführen.

In einer besonderen Ausführungsform sind Matrize und/oder Stempel so ausgestaltet, dass sie eine translatorische Bewegung zur Überbrückung des Wirkungsbereichs durchzuführen vermögen. Dadurch würde die Vorrichtung von einem geöffneten Zustand in einen geschlossenen Zustand überführt, wenn sich der Stempel und/oder die Matrize aufeinander zubewegen, sodass ein zu spritzender Hohlraum definiert ist. Mindestens eine Oberfläche dieses Hohlraums wäre von der erfindungsgemässen Folie bedeckt, so dass bei einem Spritzguss diese hinterspritzt wird.

In einer besonderen Ausführungsform umfasst die erfindungsgemässe Vorrichtung Spritzdüsen zur Befüllung einer im geschlossenen Zustand gebildeten Kavität zwischen Matrize und Stempel. Besonders bevorzugt umfasst die erfindungsgemässe Vorrichtung Spritzdüsen zur hinterspritzenden Befüllung einer mit einer dielektrischen, einen metallischen Glanz aufweisenden Folie bestückten Matrize. Weiter besonders bevorzugt wird die dielektrische, einen metallischen Glanz aufweisende Folie mittels elektrostatischer Kräfte in der Matrize an Ort und Stelle während des Spritzgussvorgangs gehalten.

Im Sinne der vorliegenden Erfindung kann als metallischer Glanz eine Optik verstanden werden, die im Wesentlichen die Eigenschaften eines metallischen Objekts emuliert. Dies kann z.B. einen Effekt, ausgewählt aus der folgenden Auswahl, umfassen: Chromstahleffekt, Alueffekt, Aluglanzeffekt, Alu-gebürstet-Effekt, Stahleffekt, Gusseiseneffekt, Kupfereffekt, Bronzeeffekt, Goldeffekt, Silberglanz, gebläuter Stahleffekt, Damaszenstahleffekt, und verschiedene farbige metallische Eloxiereffekte. Alternativ und/oder ergänzend kann auch ein glänzender Karboneffekt oder ein Perlmutteffekt oder ein irisierender Effekt mit der Lehre der vorliegenden Erfindung an dem entsprechenden Spritzobjekt realisiert werden. All diesen Effekten und den entsprechenden verwendeten Folien gemeinsam ist, dass sie in der bevorzugten Ausführungsform im Wesentlichen frei von Metallen sind. Die resultierende dielektrische Folie ist somit nicht leitfähig. Im Sinne der vorliegenden Erfindung kann im Wesentlichen frei von Metallen verstanden werden als eine Leitfähigkeit von über 10 GOhm, weiter bevorzugt über 30 GOhm, besonders bevorzugt über 100 GOhm, weiter besonders bevorzugt über 200 GOhm aufweisend verstanden werden. Sinngemäss sei diese Leitfähigkeit hinsichtlich des Oberflächenwiderstands der erfindungsgemässen Kunststoffe zu verstehen.

In einer besonderen Ausführungsform umfasst die erfindungsgemässe Vorrichtung einen Ausstosshebel zum Ausstossen des Spritzobjekts nach erfolgtem Spritzguss. Bevorzugt weist der Transportarm einen Ausstosshebel auf.

In einer weiteren besonderen Ausführungsform ist dieser Ausstosshebel in der Lage, das gegossene Spritzobjekt im Wesentlichen synchron zur Bereitstellung einer neuen dielektrischen einen metallischen Glanz aufweisenden Folie auszustossen.

In einer besonderen Ausführungsform sind Ausstosshebel und Greifer koaxial angeordnet.

Im Sinne der vorliegenden Erfindung können koaxial angeordnete Elemente als solche verstanden werden, welche im Wesentlichen in der gleichen translatorischen Achse angeordnet sind, die durch den Wirkbereich definiert ist. Alternativ und/oder ergänzend können koaxial angeordnete Elemente im Sinne der vorliegenden Erfindung verstanden werden als Elemente, welche sich hinsichtlich ihrer Längsachse in einer koaxialen Anordnung befinden, d.h., dass eine gedankliche Verlängerung einer Längsachse eines solchen Elements im Wesentlichen durch die entsprechende Längsachse des anderen Elements, zu dem eine koaxiale Anordnung besteht, verläuft.

In einer alternativen und/oder ergänzenden Ausführungsform sind die Elemente hinsichtlich ihrer Längsachsen mindestens parallel angeordnet.

In einer besonderen Ausführungsform ist der Greifer einstückig ausgebildet. Besonders bevorzugt umfasst der Greifer einen Aussenmantel zur Beförderung der dielektrischen einen metallischen Glanz aufweisenden Folien von einem Ladestapel zur Matrize. Weiter bevorzugt ist die Oberfläche des Greifers mit Ansaugöffnungen versehen und/oder mit Ausstossöffnungen versehen, welche mittels einer Vakuumanziehung und/oder eines Bernoulli-Effektes ein Halten einer dielektrischen einen metallischen Glanz aufweisenden Folie ermöglichen.

Im Betrieb ist der Greifer ausgestaltet, um von einem Stapel an dielektrischen einen metallischen Glanz aufweisenden Folien eine oberste Folie anzuheben und über wenigstens Teile seines Umfangs zu halten. Bevorzugt kann sich die Folie durch den Ansaugeffekt an den Aussenmantel des Greifers anschmiegen.

Bei Greifern, die mittels eines Ansaugeffektes ein Halten und Anheben der Folien ermöglichen, können im Innern des Greifers Luftkanäle vorgesehen sein, welche eine Fluidverbindung zwischen einer Ansaugvorrichtung hin zu den Ansaugöffnungen ermöglichen. Diese Fluidkanäle können in einem erfindungsgemässen Greifer mit der Aussenhülle des Greifers einstückig ausgebildet sein.

In einer besonders bevorzugten Ausführungsform ist der Greifer mittels eines additiven Herstellungsverfahrens und einstückig hergestellt. Als Ansaugvorrichtung kann zum Beispiel ein Kompressor dienen. Durch die Herstellung über ein additives Herstellungsverfahren ist es möglich, komplexe Luftstromgeometrien für die Luftabfuhr und das Ansaugen durch die Ansaugöffnungen zu verwirklichen. Insgesamt wird der Greifer wartungsärmer, verfügt über eine höhere Stabilität und ist dabei gleichzeitig im Vergleich leichter, was insgesamt der Ökonomie des Maschinenbetriebs entgegenkommt, da geringere Massen bewegt werden müssen.

Ein weiterer Aspekt der vorliegenden Erfindung betrifft ein Verfahren zur Herstellung eines Spritzobjekts mit Glanzoptik, insbesondere mit Metalloptik.

In einem Schritt des erfindungsgemässen Verfahrens wird eine Vorrichtung zur Erzeugung eines Spritzobjekts bereitgestellt. Besonders bevorzugt handelt es sich um eine eingangs geschilderte Vorrichtung zur Erzeugung eines Spritzobjekts. Das erfindungsgemässe Verfahren sieht weiter vor, dass eine dielektrische einen Glanz aufweisende Folie bereitgestellt wird, welche insbesondere einen metallischen Glanz aufweist. Besonders bevorzugt ist die Folie im Wesentlichen frei von Metallen. Im erfindungsgemässen Verfahren wird mindestens eine der besagten Folien mit einem Greifer aufgenommen. Dies kann z.B. über das Ansetzen eines Vakuums zwischen dem Greifer und der aufgenommenen Folie bewerkstelligt werden.

Im erfindungsgemässen Verfahren wird die Folie in einen Wirkungsbereich der Vorrichtung überführt und eine elektrostatische Kraft in diesem Wirkungsbereich auf die Folie aufgebracht. Die Matrize wird mit der geladenen Folie bestückt, sodass bei der Erzeugung des Spritzobjekts die Folie im Wesentlichen elektrostatisch in der Matrize gehalten wird.

In einer erfindungsgemässen Ausgestaltung des Verfahrens können in einem Spritzobjekt eine Mehrzahl an Folien jeweils mit einem Greifer oder einer Mehrzahl an Greifern bewegt werden, je nachdem, wie die geometrische Ausgestaltung des zu erzeugenden Spritzobjekts aussieht, resp. wo und welche Teile des erzeugten Spritzobjekts mit dem entsprechenden Glanz, insbesondere metallischen Glanz ausgestaltet werden können.

Analog zur oben geschilderten erfindungsgemässen Vorrichtung ist auch für das erfindungsgemässe Verfahren neben dem metallischen Glanz, Karboneffekte, irisierende Effekte und/oder Perlglanz von der erfindungsgemässen Lösung umfasst und profitiert von den Vorteilen der erfindungsgemässen Lehre.

Ein weiterer Aspekt der vorliegenden Erfindung betrifft ein Verfahren zur Herstellung eines Spritzobjektes insbesondere mit Metalloptik oder mit glänzender Optik wie oben geschildert.

In einer besonderen Ausführungsform wird das Aufbringen der elektrostatischen Ladung im Wesentlichen koaxial zu einer Matrize und einem Stempel der Vorrichtung durchgeführt. Bevorzugt ist der Greifer koaxial zur Matrize und dem Stempel ausgerichtet.

In einer weiteren besonderen Ausführungsform umfasst das erfindungsgemässe Verfahren ein Ausstossen eines Spritzgussteils. Dabei kann das Ausstossen im Wesentlichen gleichzeitig mit dem Aufbringen der elektrostatischen Ladung auf einer nachfolgenden dielektrischen einen metallischen Glanz aufweisenden Folie erfolgen.

Im Sinne der vorliegenden Erfindung kann als ein im Wesentlichen gleichzeitiges Aufbringen der elektrostatischen Ladung mit dem Ausstossen eines Spritzgussteils verstanden werden als miteinander getaktete Operation, d.h., dass die beiden Arbeitsschritte in einem bestimmten Intervall stattfinden, in dem Intervall, z.B., in dem. Matrize und Stempel voneinander beabstandet sind, oder im Begriff es zu werden, indem z.B. ein Wirkungsbereich überbrückt wird.

In einer besonderen Ausführungsform des erfindungsgemässen Verfahrens wird mittels eines schwenkbaren Hebels sowohl der Ausstoss als auch das Aufbringen der elektrostatischen Ladung, d.h. das Überführen des Greifers in den Wirkungsbereich eines Gerätes zum Aufbringen der elektrostatischen Ladung durchgeführt.

Mit der erfindungsgemässen Vorrichtung und dem gezeigten Verfahren wird es möglich, ein Spritzobjekt mit einem metallischen Glanz bereitzustellen, welches vollständig rezyklierbar ist.

Durch den Verzicht auf metallische Elemente muss nicht auf einen abgeschirmten Bereich ausserhalb der Form zur Aufbringung der Ladung Rücksicht genommen werden.

Bei Vorrichtungen, in denen eine elektrostatische Ladung auf metallische Werkzeuge aufgebracht wird, ist es erforderlich, abgesicherte Ladungsräume zu errichten.

Zudem besteht die Möglichkeit, die gesamte Vorrichtung kompakter zu halten und das Verfahren effizient durchzuführen, indem die Aufbringung der elektrostatischen Ladung in einem Wirkungsbereich der Vorrichtung stattfinden kann und nicht vor dem Einbringen des Greifers in den Wirkungsbereich der Vorrichtung erfolgen muss. In der vorliegenden Lösung findet die Aufbringung der Ladung im Wirkbereich der Spritzgussvorrichtung statt, d.h. im Raum der transversalen Bewegung, welcher die Spritzgusswerkzeuge, also die beiden Formteile Stempel und/oder Matrize ohnehin überbrücken und zum gesicherten und nicht eingreifbaren Bereich der Vorrichtung gehören. Dies schafft zudem eine betriebssicherere Umgebung für die bedienenden Personen.

Ein weiterer Aspekt der vorliegenden Erfindung betrifft die Verwendung einer dielektrischen einen Glanz aufweisenden Folie, insbesondere einen metallischen Glanz aufweisenden Folie zur Herstellung eines Spritzobjektes. Dabei wird eine elektrostatische Ladung auf die dielektrische Folie innerhalb eines Wirkungsbereichs einer Vorrichtung aufgebracht. Der Wirkungsbereich definiert einen Zwischenraum zwischen einer Matrize und einem Stempel im geöffneten Zustand einer Spritzgussvorrichtung. Insbesondere betrifft die Verwendung der dielektrischen einen Glanz aufweisenden Folie eine Verwendung in Verbindung mit einer eingangs geschilderten Vorrichtung und/oder einem eingangs geschilderten Verfahren.

In einer besonderen Ausführungsform der erfindungsgemässen Verwendung ist die dielektrische, insbesondere einen metallischen Glanz aufweisende Folie im Wesentlichen frei von Metallen. Im Sinne der vorliegenden Erfindung kann im Wesentlichen frei von Metallen verstanden sein als eine Folie, deren Widerstand insgesamt bezüglich einer angelegten Spannung über die Dicke der Folie von grösser als 10 GOhm ist. Alternativ und/oder ergänzend kann eine einen metallischen Glanz aufweisende Folie, die im Wesentlichen frei von Metallen ist, verstanden werden als eine Folie, deren Metallanteil in Gewichtsprozenten geringer ist als 0,05 %, insbesondere geringer als 0,02 % weiter insbesondere geringer als 0,01 %.

In einer besonderen Ausführungsform ist die Folie mehrschichtig.

In einer weiteren besonderen Ausführungsform weist die Folie eine Dicke von insgesamt zwischen 25 und 250 µm, insbesondere zwischen 50 und 200 µm, weiter insbesondere zwischen 50 und 150 µm auf.

In einer besonderen Ausführungsform umfasst die Folie ein Trägermaterial aus einem Kunststoff, insbesondere einem Polypropylenkunststoff, und eine Lackschicht auf. Besonders bevorzugt ist die Lackschicht kratzfest.

In einer alternativen Ausführungsform umfasst die Folie ein Trägermaterial aus einem Kunststoff, insbesondere einem Polypropylenkunststoff, besonders bevorzugt eine ungereckte Polypropylen-Folie (CPP). Die Trägermaterial kann in einer weiteren besonderen Ausführungsform eine Schichtdicke von zwischen 50 und 250 µm, bevorzugt von zwischen 100 und 150 µm, weiter bevorzugt zwischen 120 und 140 µm.

In einer weiteren besonderen Ausführungsform umfasst die letztgenannte Folie eine Deckschicht aus einem Lack auf.

In einer alternativen Ausführungsform umfasst diese letztgenannte Folie eine Deckschicht aus hochtransparentem Kunststoff auf. Bevorzugt handelt es sich bei dem Hochtransparentem Kunststoff um eine Polypropylen-Folie, besonders bevorzugt um eine gestreckte Polypropylen-Folie (OPP oder BOPP). Besonders bevorzugt ist die Deckschicht eine biaxial orientierte Polypropylen-Folie (BOPP).

In einer besonderen Ausführungsform ist die Deckschicht zwischen 1 und 10 µm dick, insbesondere zwischen 2 und 6 µm dick, bevorzugt 4 µ dick.

In einer besonderen Ausführungsform weist die mehrschichtige Folie mindestens einen Haftvermittler auf. Insbesondere weist das Trägermaterial einen Haftvermittler auf. Dieser Haftvermittler kann auf der Aussen- und oder Innenschicht aufgebracht sein und dient zur verbesserten Haftung mit dem gespritzten Kunststoffmaterial und/oder mit den weiteren Schichten der dielektrischen, insbesondere einen metallischen Glanz aufweisende Folie, wie zum Beispiel einer Farbschicht und/oder einer Deckschicht.

Im Sinne der vorliegenden Erfindung kann das das Trägermaterial der Folie die Schicht in einer mehrschichtigen Folie verstanden werden, die im Spirtzgussverfahren mit dem gespritzten Kunststoff eine Verbindung eingeht. Im fertigen Spritzobjekt handelt es sich beim Trägermaterial um den Kunststoff, der zum Hinterspritzen der Folie eingeschossen wird.

In einer ganz besonders bevorzugten Ausführungsform besteht die Lackschicht aus einem Material lösemittelbasierten, verformbaren Glanzlack mit bevorzugt mindestens 80% Lichtdurchlässigkeit. Weiter besonders bevorzugt ist die Lackschicht mittels eines Siebdruckverfahrens aufgetragen, ganz besonders bevorzugt in einem Zweikomponenten-Siebdruckverfahren.

In einer besonderen Ausführungsform weist die dielektrische einen metallischen Glanz aufweisende Folie eine Oberflächenspannung von über 30 dyn/cm auf. Besonders bevorzugt weist die dielektrische einen metallischen Glanz aufweisende Folie eine Oberflächenspannung von über 40 dyn/cm auf.

In einer weiteren besonderen Ausführungsform ist die dielektrische einen metallischen Glanz aufweisende Folie im Wesentlichen frei von Phthalaten (gemäss EG 2005/84)

In einer besonderen Ausführungsform umfasst die Folie mindestens eine transparente Schicht.

In einer weiteren besonderen Ausführungsform ist die Folie ein Laminat, umfassend eine Mehrzahl an Schichten. Insbesondere umfasst das Laminat eine transparente erste Schicht, auf der eine Reihe von Farben aufgedruckt ist.

In einer weiteren besonderen Ausführungsform umfasst die Folie eine Tiefenwirkung erzeugende Bedruckung. Dies kann zum Beispiel über eine mehrschichtige Lackierung der Folien erreicht werden. So können zum Beispiel Glanzlacke mit Mattlacken und/oder Feinmatt kombiniert werden, um eine besondere Tiefenwirkung einer Folienfarbe zu erreichen.

In einer weiteren besonderen Ausführungsform umfasst das Trägermaterial der Folie eine Lasurfarbe und/oder eine Spiegelfarbe, bevorzugt weisen diese keine metallische Komponenten auf. Besonders bevorzugt weist die Folie eine oder mehr Beschichtungen mit einer Siebdruckfarbe auf. Die mit dem erfindungsgemässen Verfahren herstellbaren Spritzteile sind vollständig rezyklierbar. Bei gemäss dem Stand der Technik hergestellten Spritzteilen mit metallischer Optik werden Metallfolien verwendet, um mit einer dünnen Metallschicht die gewünschte Metalloptik zu erreichen. Werden diese Spritzteile der Wiederverwertung zugeführt, so werden die dabei verwendeten Extruder durch die Metallteile verstopft und beschädigt. Solche Spritzteile müssen daher der Kehrichtverbrennung zugeführt werden und sind nicht rezyklierbar, selbst bei vergleichsweise geringem Metallgehalt.

In einer besonderen Ausführungsform umfasst die Folie einen UV-Lack zur verbesserten UV-Beständigkeit und erhöhter Kratzfestigkeit.

Ein zusätzlicher Vorteil der erfindungsgemässen Folien ist es, dass Folien, welche im Wesentlichen hauptsächlich aus Polypropylen bestehen, keine innerhalb der Folienoberflächen bestehende Spannungsunterschiede aufweisen, welche z.B. aufgrund von Temperaturschwankungen entstehen können und somit kein Aufrollen der einzelnen Folienblätter stattfindet, was die Verarbeitung in der erfindungsgemässen Spritzgussvorrichtung verbessert. Zudem verhindert dies «Rolleffekte», wenn Folien aus unterschiedlichem Material durch abweichende Oberflächenspannungen aufrollen.

Ein weiterer Vorteil der erfindungsgemässen Folien ist, dass keine unerwünschten Ladungseffekte innerhalb der Vorrichtung entstehen.

Ein weiterer Vorteil der erfindungsgemässen Folien ist die Kompatibilität mit einem Trägermaterial.

Die erfindungsgemässen Folien sind bevorzugt mit einem thermoplastischen Bestandteil ausgewählt, welcher zu einer Erweichung im Temperaturbereich von zwischen 80 und 100 °C führt. Die Trägersubstanz ist bevorzugt so gewählt, dass sie bei einer Temperatur von ca. 200 °C die optimale Viskosität für den Spritzguss aufweist. Dies führt im Betrieb dazu, dass die Folie mit dem metallischen Glanz optimal mit der Trägersubstanz verbindet und beim Hinterspritzen mit dieser einen Stoffschluss eingeht.

Ein weiterer Vorteil der erfindungsgemässen Folie ist das vergleichsweise geringere Gewicht.

Ein weiterer Vorteil der erfindungsgemässen Folie ist, dass durch die höhere Flexibilität der Folien, die im Wesentlichen frei von Metallen sind, viele Geometrien verwirklicht werden können, die mit vergleichsweise steiferen metallischen Folien nicht möglich sind.

Wie gesagt, bestehen durch die erfindungsgemässe Folie nahezu keine «Rolleffekte». Mit der erfindungsgemässen Folie ist es dadurch möglich, auch vergleichsweise kleinräumigere Bereiche eines Spritzobjektes mit der entsprechenden Folie zu versehen, um diese anschliessend zu hinterspritzen. Die insgesamt flexiblere Folie schmiegt sich besser an die Radien und Winkel der Form des zu erzeugenden Spritzobjektes und der Matrize an, was einen saubereren Spritzguss und ein besseres Ausformen des Spritzobjektes ermöglichten.

Gerade im besonderen Bereich der als Gebrauchsgut verwendeten Spritzobjekte für den Haushalt sind die ästhetischen Anforderungen an das Objekt gross. Gleichzeitigt steigt die Erwartung des Konsumenten an die Rezyklierbarkeit der Gebrauchsgüter. Die Erfindungsgemässen Folien ermöglichen das Bereitstellen einer grossen Bandbreite an für den Haushaltsgebrauch geeigneten Gebrauchsgüter als Verbundformteile mit metallischer Ästhetik, welche im Wesentlichen vollständig rezyklierbar sind.

Ebenfalls kann die im Vergleich flexiblere und leichtere erfindungsgemässe Folie leichter für bestimmte Umbugeffekte verwendet werden, wo z.B. ein glatter Abschluss oder eine Gussnaht verhindert werden soll und ein entsprechender Umbug am Spritzobjekt durch eine bestimmte Geometrie der Patrize und/oder des Stempels vorgesehen ist.

In einer besonderen Ausführungsform umfasst der Stempel und/oder die Matrize ein Schneidelement, welches ausgestaltet ist, einen Folienüberhang beim Entkernen abzutrennen.

Ein weiterer Vorteil der erfindungsgemässen Folie ist es, dass vergleichsweise "härtere" Kanten möglich sind als mit den herkömmlichen Folien. Mit den erfindungsgemässen Folien ist es z.B. möglich, eine Kante von 90° an den Spritzobjekten zu realisieren. Die vergleichsweisen «steiferen» metallischen Folien lassen sich nicht in einer harten Kante knicken, sodass nur ein runder Radius realisiert werden kann.

Durch die Flexibilität und das vergleichsweise geringere Gewicht der Folien können zudem besonders grosse Spritzobjekte bedient werden.

In einer besonderen Ausführungsform sind die Greifer mit einem additiven Herstellungsverfahren, welches ein Lasersintern umfasst, herstellbar.

In einer besonderen Ausführungsform umfasst die erfindungsgemässe Vorrichtung ein Vereinzelungsgebläse, welches ausgerichtet ist, um einen Stapel an erfindungsgemässen Folien beim Aufnehmen durch den Greifer zu vereinzeln. Dazu kann insbesondere ein Luftstrom quer zu einem Stapel der Folien geblasen werden, so dass in Verbindung mit einem Luftsog durch die Ansaugöffnungen eines Greifers ein Aufnehmen von einzelnen Folien stattfindet.

In einer besonderen Ausführung umfasst die erfindungsgemässe Vorrichtung zudem eine Anpressvorrichtung. Als Anpressvorrichtung kann z.B. ein Bügel dienen, welcher die aufgenommene Folie um den Greifer glattstreicht. Ebenso denkbar ist es, ein weiteres Gebläse einzusetzen, welches die Folie anbläst an den Greifer. Alternativ und/oder ergänzend kann der Greifer durch ein Abrollen auf den Folien eine bessere Anpressung derselben erreichen. Ebenfalls alternativ und/oder ergänzend kann vor dem Bestücken der Matrize mit der Folie mittels einer Bürstenvorrichtung, welche gleichzeitig ausgelegt ist, eine elektrostatische Spannung auf die Folie aufzubringen, dieselbe an den Greifer angepresst werden. Grundsätzlich geeignete Verfahren zum Aufbringen einer elektrostatischen Ladung auf hinterspritzte Folien sind dem Fachmann bekannt. So beschreibt Scott E. Shelton in einem in Plastics Technology (2004) erschienenen Artikel «In-Mold Labeling: Electrostatics Are the Way to Go» wie eine statische Ladung auf eine Folie die Verwendung der Vakuum Ansaugung in der Form überflüssig machen kann.

In einer besonderen Ausführungsform ist das Trägermaterial des Spritzobjektes, mit dem die Folie hinterspritzt wird, bevorzugt transparent und/oder weiss. Dadurch können allfällige metallische oder Glanzeffekte der Folie besser zur Geltung kommen.

In einer besonderen Ausführungsform umfasst das Trägermaterial ein Aufklärungsmittel, welches zu einer verbesserten Klarheit beim Aushärten des Kunststoffs führt. Solche Mittel sind als Nukleierungsmittel handelsüblich erwerbbar.

In einer besonderen Ausführungsform ist die Folie bedruckt.

In einem besonderen Beispiel kann die Folie mittels eines Flexodrucks bedruckt werden. Dazu können insbesondere Anilinfarben verwendet werden, um z.B. einen Schriftzug, eine Musterung und/oder eine andere dekorative Farbgebung zu realisieren.

In einer besonderen Ausführungsform umfasst die Folie einen Flammhemmer.

In einer besonderen Ausführungsform ist der verwendete UV-Lack auf der Folie ein Glanzlack. In einer weiteren besonderen Ausführungsform weist die verwendete Folie zusätzlich mindesten einen weiteren als Lackschicht ausgebildeten Lack auf, insbesondere einen Mattlack auf.

Für einen Fachmann versteht es sich von selbst, dass sämtliche oben geschilderte Ausführungsformen in einer Ausgestaltung einer erfindungsgemässen Vorrichtung, der Durchführung eines erfindungsgemässen Verfahrens und der Verwendung einer erfindungsgemässen Folie in einer beliebigen Kombination miteinander verwirklicht werden können.

Im Folgenden wird nun die Erfindung anhand einiger konkreter Ausführungsbeispiele näher erläutert. Weiter werden dazugehörige Figuren gezeigt, welche rein illustrativ das Verfahren und die erfindungsgemässe Vorrichtung illustrieren sollen. Die Figuren sind nicht massgeblich und die gezeigten Ausführungsbeispiele nicht einschränkend auf die Durchführung der erfindungsgemässen Lösung.

Für einen Fachmann ergeben sich aus dem Studium der Ausführungsbeispiele und der Figuren weitere vorteilhafte Ausführungsformen der vorliegenden Erfindung.

### Fig urenbeschrieb

Anhand der nachfolgenden Figuren werden Ausführungsbeispiele der Erfindung beschrieben. Es zeigen
Fig. 1: schematisch eine einfache Anordnung der erfindungsgemässen Vorrichtung;
Fig. 2: schematisch den Aufbau einer erfindungsgemässen Vorrichtung zur Herstellung eines metallischen anmutenden 40-Liter-Eimers, und
Fig. 3 schematisch die Ausgestaltung einer erfindungsgemässen Vorrichtung zur Herstellung eines 20-Liter-Eimers mit metallischer Optik.

### Ausführung der Erfindung

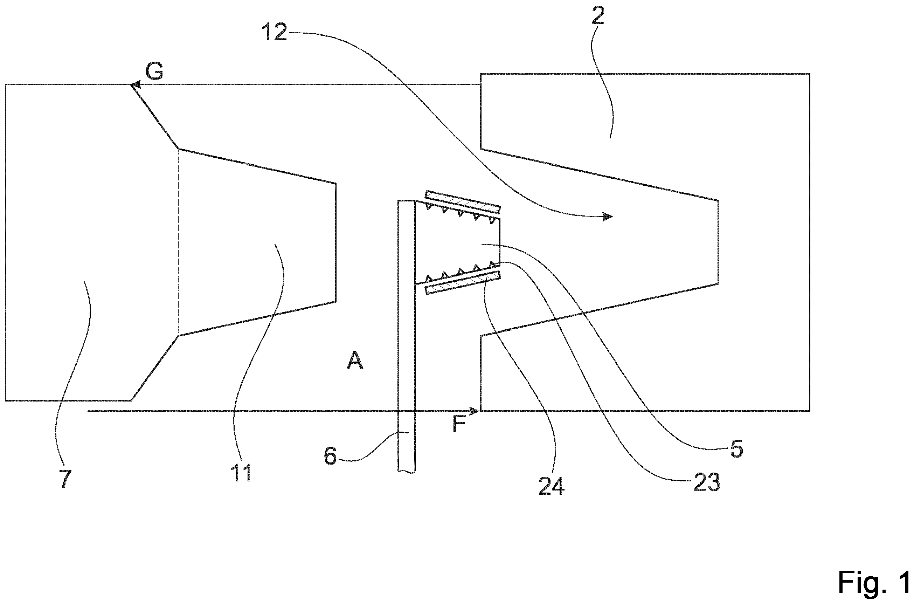

In der Fig. 1 ist der Grundgedanke der Erfindung illustrativ zusammengefasst.

Die Vorrichtung 1 umfasst einen Stempel 11, welcher in einer translatorischen Bewegung F durch Überbrückung eines Wirkungsbereichs A in Wirkverbindung mit einer Matrize 2 gebracht werden kann. Die Matrize 2 definiert einen Hohlraum 12, welcher bei verschlossenem Werkzeug der Vorrichtung 1 die entsprechende Geometrie eines zu erzeugenden Spritzobjektes bestimmt. Dieser Hohlraum 12 wird auf der einen Seite durch die Matrize 2 und auf der anderen Seite durch den Stempel 11 begrenzt. Der Stempel 11 ist auf einem Lastrahmen 7 montiert, welcher mittels eines Linearaktuators translatorisch in die Richtung F bewegt werden kann, um die Form zu schliessen.

Derselbe Aktuator kann den Lastrahmen 7 des Stempels 11 wieder in die Ursprungslage E zurückbewegen und dadurch die Form öffnen. In einem geöffneten Zustand, d.h., wenn Stempel 11 und Matrize 2 beabstandet sind, erstreckt sich zwischen diesen beiden Elementen ein Wirkungsbereich A. In diesen Wirkungsbereich A greift im geöffneten Zustand ein Greifer 5 ein, welcher mittels eines Hebels 6 in diesen besagten Wirkungsbereich A bewegt wird. In diesem Wirkungsbereich A wird eine auf dem Greifer 5 aufgebrachte Folie 24, welche mittels Ansaugöffnungen 23 von einem Stapel an Folien 24 (nicht gezeigt) vom Greifer aufgenommen wurde, in den Wirkungsbereich eines eine elektrostatische Ladung auf die Folie 24 aufbringenden Ladungsvermittlers gebracht. Der Ladungsvermittler ist in der folgenden Darstellung nicht gezeigt, kann aber, z.B. auf der dem Hebel 6 gegenüberliegenden Seite, ebenfalls mittels eines Hebels in den Wirkbereich des Greifers gebracht werden.

Der Greifer 5 kann auch durch die Bewegung in den Wirkungsbereich hinein von einem Ladungsvermittler mit der entsprechenden Ladung beaufschlagt werden. Die elektrostatisch aufgeladene Folie 24 wird innerhalb des Wirkungsbereiches A an die Matrize 2 geschmiegt, sodass sie bei einer geschlossenen Spritzgussform durch die Trägersubstanz hinterspritzt wird und die Aussenwandung des Spritzobjektes definiert.

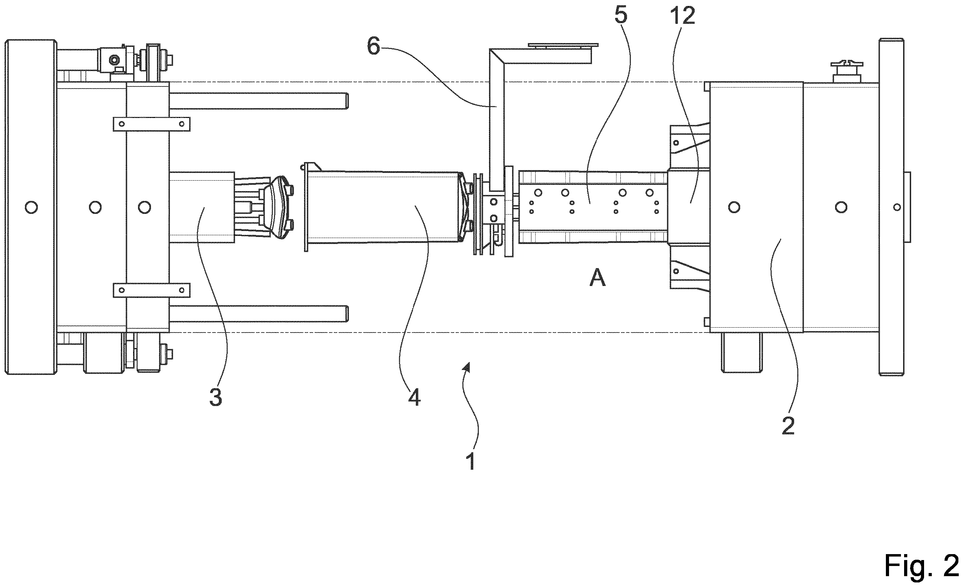

In der Fig. 2 ist ein konkretes Ausführungsbeispiel einer erfindungsgemässen Vorrichtung 1 gezeigt, bei dem als Spritzobjekt 4 ein Eimer hergestellt wird, wie er gängigerweise als Haushaltseimer verwendet wird, und bei dem ein metallischer Glanz gewünscht wird, sodass der Eimer einen Eindruck hinterlässt, als wäre er aus Aluminium gefertigt.

Die Vorrichtung 1 umfasst neuerlich einen Stempel 3 und eine dem Stempel gegenüberliegend angeordnete Matrize 2, welche einen Hohlraum 12 umfasst, in den der Stempel 3 einführbar ist, sodass insgesamt die Kavität in Form des Spritzobjektes 4 entsteht. Im gegenwärtigen Zustand der Vorrichtung 1 ist die Spritzgussvorrichtung geöffnet, und der Stempel 3 und die Matrize 2 sind voneinander beabstandet, sodass sich zwischen diesen beiden Elementen ein Wirkungsbereich A erstreckt. In dieser Ausführungsvariante dargestellt ist der gleichzeitige Ausstoss eines fertigen Spritzobjektes 4 mit dem Bestücken der Matrize 2 mit einer neuen Folie (nicht gezeigt), welche sich im vorliegenden Beispiel über einen Greifer 5 erstrecken würde, sodass dieser im Wesentlichen von der Folie ummantelt würde.

Die Folie ist zum dargestellten Zeitpunkt der Vorrichtung 1 bereits elektrostatisch dergestalt beladen, dass ein Kontaktieren des Greifers 5 mit einer Innenwand der Kavität der Matrize 2 zu einer elektrostatischen Anhaftung der Folie an die besagte Innenwand führen würde. Greifer 5 sowie entsprechende Bauteile zur Entkernung sind im vorliegenden Beispiel mittels eines Hebels 6 in den Wirkungsbereich A geführt. In einem nächsten Schritt würde der Eimer 4 aus dem Wirkungsbereich A entfernt und die Spritzgussvorrichtung geschlossen, nachdem die Folie in den Innenbereich des Hohlraums 12 überführt worden ist. Zum Verschliessen der Vorrichtung 1 bewegt sich der Stempel 3 translatorisch in Richtung der gestrichelten Linien, überbrückt den Wirkungsbereich und verschliesst die Spritzgussform und den Hohlraum als Kavität fluiddicht, sodass eine Trägersubstanz in diesen gespritzt werden kann.

Dadurch, dass alle wesentlichen Bearbeitungsschritte im Wirkbereich stattfinden, können die insgesamt bewegten Massen reduziert werden; zudem lässt sich mit kleineren Arbeitswegen arbeiten, und die Vorrichtung ist insgesamt platzsparend in einer Werkstrasse integrierbar.

Durch die Verwendung von nicht metallischen Folien kann die Ladung im Wirkungsbereich angebracht werden, und durch die dielektrischen Eigenschaften der im Wesentlichen hauptsächlich Polypropylen umfassenden Folien können diese auf einer Seite mit einer elektrostatischen Ladung versehen werden, sodass sie über eine Anziehungskraft im entsprechenden Formteil an Ort und Stelle gehalten werden, während die Spritzgussmasse, also die Trägersubstanz, in die Kavität gespritzt wird.

Die im vorliegenden Beispiel verwendete Folie ist eine Polypropylenfolie mit einer UV-Glanzlackbeschichtung, welche auf der der Beschichtung gegenüberliegenden Seite mehrere Farblagen aufgetragen hat. Eine silbrige, anschliessend eine rote, dann erneut eine silbrige Farbschicht wurden an einen Polypropylenträger laminiert, sodass eine insgesamt zwischen 140 und 150 µm dicke Folie besteht, welche im Wesentlichen vollständig aus Polypropylen besteht. Der UV-Lack garantiert die Kratzfestigkeit der im fertigen Spritzobjekt aussenliegenden Schicht der Folie. Durch die entsprechende Schichtung kann ein metallischer Effekt erreicht werden, und dabei nahezu vollständig ohne metallische Elemente, abgesehen von natürlich vorkommenden Verunreinigungen, gearbeitet werden.

Alternativ zu einer lackbeschichteten Folie kann die Folie mit einer Kunststoff Deckschicht versehen werden. Zum Beispiel können Folien verwendet werden mit einer weissen oder transparenten CPP Polymerschicht, die je nach gewünschter Optik mit einer oder mehren Farbschichten versehen ist. Im vorliegenden Beispiel weist die CPP Schicht zunächst einen Kleber als Haftvermittler auf, auf welchen gedruckt eine oder mehrere Farben aufgetragen werden.

Wird zum Beispiel ein Spritzobjekt mit einem Silber-Look gewünscht, so wird auf die transparenten CPP Polymerschicht ein Kleber als Haftvermittler aufgetragen und anschliessend die CPP Polymerschicht mit Silberfarbe bedruckt. Wird hingegen eine Spritzobjekt mit Carbon-Look oder farbigem Metallic-Look gewünscht so kann, die mit dem Kleber versehene CPP Polymerschicht zunächst mit Silberfarbe und darauf mit einem Gitternetz schwarzer Farbe bedruckt werden, und für den Carbon-Look eine Silberfarbe und darauf eine rote Farbe für den roten metallic Look, respektive gedruckt werden. Die Zusammenstellung der Druckfarben und Anzahl Farbschichten wird vom Fachmann in Abhängigkeit der gewünschten Optik gewählt.

Die farbig bedruckten Folien sind mit einer hochtransparenten Kunststoffschicht versiegelt. Im vorliegenden Beispiel wurden die Silber-Look Folie, die Carbon-Look Folie und die rote Metallic-Look Folie mit einer biaxial orientierteren Polypropylenfolie (BOPP) versiegelt.

Die verwendeten Folien weisen eine CPP-Folien Schichtdicke von zwischen 120 bis 140 µm auf und eine Deckschicht aus BOPP-Folie von 4 µm auf.

Im Sinne der vorliegenden Erfindung soll auch als im Wesentlichen metallfrei verstanden werden als nicht mehr als im Rahmen der natürlichen Verunreinigungen der verwendeten Ausgangsmaterialien bestehende Metallelemente umfassen.

Der damit erzeugte Eimer ist komplett rezyklierbar, umweltverträglich und entsprechenden einschlägigen Normen zur Rezyklierbarkeit konform **(Europäische Kunststoffverordnung** - **EU Nr. 10/2011).** Insbesondere umfassen die erfindungsgemässen Folien, welche weniger als 0,01 mg/kg an nicht rezyklierbaren Bestandteilen, u.a. an metallischen Bestandteilen, wie z.B. Aluminium.

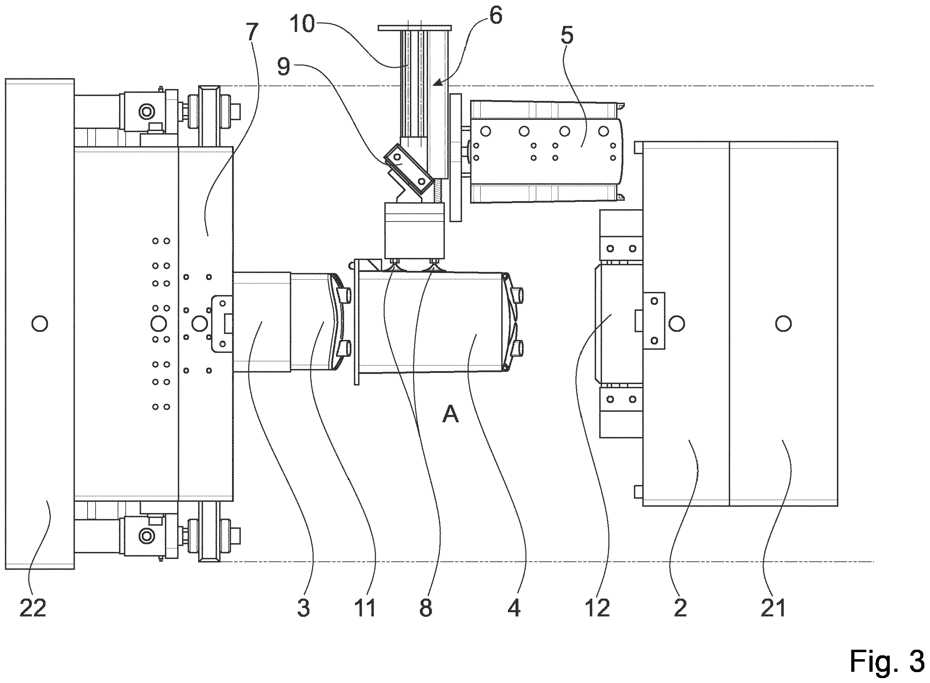

Fig. 3 zeigt ein weiteres Ausführungsbeispiel, bei dem ein vergleichsweise kleinerer Eimer als Spritzobjekt 4 hergestellt wird. Die erfindungsgemässe Vorrichtung 1 umfasst weiter im Wesentlichen einen Stempel 3 und eine dem Stempel gegenüberliegend angeordnete Matrize 2. Diese Matrize definiert einen Hohlraum 12, in den der Stempel 3 einführbar ist und die Kavität für das zu erzeugende Spritzobjekt 4 bilden. Die Matrize 2 ist an einem Matrizenlastrahmen 21 befestigt. Dieser Matrizenlastrahmen kann so ausgestaltet sein, dass die entsprechende Matrize 2 austauschbar ist, sodass sie zu Wartungszwecken vom Lastrahmen 21 entfernt werden kann. Der Lastrahmen 21 ist ebenfalls ausgestaltet, um die entsprechenden Drucke im Spritzgussverfahren auszuhalten.

Der Stempel 3 ist ebenfalls an einem Lastrahmen 22 befestigt, und zwar über einen translatorisch in Richtung der Matrize 2 verschiebbaren Stempelaktuator 7, welcher mittels eines Längslagers vom Lastrahmen 22 wegbewegbar ist, den gesamten Stempel 3 in den Hohlraum 12 bewegt. Der Stempel 3 verfügt zudem über ein Ausstossende 11, welches mittels einer Ausstosshydraulik (nicht einsehbar) in der Lage ist, das ausgeformte Spritzobjekt zu entkernen, um die Entnahme durch einen mit Kerngreifern 8 ausgestatteten Entkernhebel 9 zu erleichtern.

Der Entkernhebel 9 ist Bestandteil des Hebels 6, welcher sich hier im Wirkungsbereich A zwischen Stempel 3 und Matrize 2 befindet. Der Hebel 6 hat ein aktuiertes Entkernelement 9, welcher mittels einer Längsführung 10 aus dem Wirkungsbereich, und in den Wirkungsbereich A hinaus- und hineinbewegt werden kann, um das entsprechende Spritzobjekt 4 zu entnehmen. An einem Befestigungsmittel, ebenfalls austauschbar, am Hebel 6 angeordnet ist ein Greifer 5, welcher analog zur Fig. 2 mit einer entsprechenden Folie bestückt werden kann (nicht gezeigt). Dieser Greifer 5 ist hier in einer Warteposition und über einen Hebel im Vergleich zum Entkernelement schwenkbar angeordnet, sodass sich beim Hinausbewegen des Entkernelements der Greifer 5 in die vorbereitete Lage zum Bestücken der Kavität mit einer Folie befindet.

Die verwendete Folie weist im vorliegenden Ausführungsbeispiel einen Glanzlack auf, um gemeinsam mit einer Farbbeschichtung auf einem PP-Träger einen metallischen Glanzeffekt zu erzeugen. Geeignete kratzfeste Glanzlacke sind zum Beispiel NoriCure ® UV-L3. Zur Erzeugung der eine metallische Optik habenden Farbe wird eine metallfreie Siebdruckfarbe verwendet, die in mehreren Lagen auf der PP Folie aufgetragen wird. Temperaturbeständige Siebdruckfarben, die für das Hintersitzen in einem Thermoformprozess geeignet sind, sind auf dem Markt erhältlich, u.a. z.B. glänzende lösungsmittelbasierte Ein- oder Zweikomponentenfarben Siebdruckfarben.

Alternativ sind selbstverständlich die oben genannten COPP Folien mit BOPP Deckschicht verwendbar.

## Patentansprüche

1. Vorrichtung (1) zur Erzeugung eines Spritzobjektes (4), insbesondere eines im Wesentlichen vollständig rezyklierbaren Spritzobjektes (4) mit wenigstens teilweiser metallischer Optik, umfassend:
a. Eine Matrize (2), welche im Wesentlichen einer Aussenform des Spritzobjektes entspricht;
b. Ein Stempel (3) zum Verschliessen der Matrize welcher im Wesentlichen der Innenform des Spritzobjektes (4) entspricht;
c. Ein Greifer (5) zur Bestückung der Matrize mit einer dielektrischen, einen metallischen Glanz aufweisenden Folie, insbesondere mit einer dielektrischen einen metallischen Glanz aufweisenden Folie die im Wesentlichen frei von Metallen ist;
d. Einen Ladungsvermittler zur Aufbringung einer elektrostatischen Ladung auf mindestens einer Seite der dielektrischen, einen metallischen Glanz aufweisenden Folie, und wobei
die Vorrichtung einen Wirkungsbereich (A) umfasst und der Ladungsvermittler derart angeordnet ist, dass die elektrostatische Ladung auf die dielektrische, einen metallischen Glanz aufweisenden Folie innerhalb des Wirkungsbereichs aufgebracht wird.

2. Vorrichtung gemäss Anspruch 1, umfassend einen Transportarm (6) zur Bewegung des Greifers und/oder des Ladungsvermittlers in- und aus den Wirkungsbereich.

3. Vorrichtung gemäss einem der Ansprüche 1 oder 2, wobei der Greifer Ansaugöffnungen umfasst zum Ansaugen und/oder Halten von einzelnen oder mehreren dielektrischen, einen metallischen Glanz aufweisenden Folien.

4. Vorrichtung gemäss einem der Ansprüche 1 bis 3, wobei der Wirkungsbereich (A) einen Zwischenraum zwischen der Matrize und dem Stempel in geöffnetem Zustand definiert.

5. Vorrichtung gemäss einem der Ansprüche 1 bis 4, wobei die Matrize und/oder der Stempel ausgestaltet ist, um eine translatorische Bewegung zur Überbrückung des Wirkungsbereichs in einen geschlossenen Zustand durchzuführen.

6. Vorrichtung gemäss einem der Ansprüche 1 bis 5, umfassend Spritzdüsen zur Befüllung einer im geschlossenen Zustand gebildeten Kavität zwischen Matrize und Stempel, insbesondere zur hinterspritzenden Befüllung einer mit einer dielektrischen, einen metallischen Glanz aufweisenden Folie bestückten Matrize.

7. Vorrichtung gemäss einem der Ansprüche 1 bis 6, umfassend einen Ausstosshebel zum Ausstossen des Spritzobjektes nach erfolgtem Spritzguss, insbesondere wobei der Transportarm einen Ausstosshebel aufweist.

8. Vorrichtung gemäss Anspruch 7, wobei Ausstosshebel und Greifer koaxial angeordnet sind, insbesondere ebenso hinsichtlich der Matrize und des Stempels im Wirkungsbereich angeordnet sind.

9. Vorrichtung gemäss einem der Ansprüche 1 bis 8, wobei der Greifer im Wesentlichen einstückig ausgebildet ist.

10. Verfahren zur Herstellung eines Spritzobjektes mit Metalloptik, umfassend die Schritte:
a. Bereitstellen einer Vorrichtung zur Erzeugung eines Spritzobjektes, insbesondere einer Vorrichtung gemäss Anspruch 1;
b. Bereitstellen einer dielektrischen, einen metallischen Glanz aufweisenden Folie, insbesondere mit einer dielektrischen einen metallischen Glanz aufweisenden Folie;
c. Aufnehmen mindestens einer der besagten Folien mit einem Greifer;
d. Überführen der Folie(n) in einen Wirkungsbereich der Vorrichtung und Aufbringen einer elektrostatischen Ladung auf einer Seite der Folie(n);
e. Bestückung einer Matrize mit der oder den geladenen Folie(n), so dass bei der Erzeugung des Spritzobjektes die Folie(n) im Wesentlichen elektrostatisch in der Matrize gehalten wird oder werden.

11. Verfahren gemäss Anspruch 10, wobei das Aufbringen der elektrostatischen Ladung im Wesentlichen koaxial zu einer Matrize und einem Stempel der Vorrichtung erfolgt.

12. Verfahren gemäss einem der Ansprüche 10 oder 11, weiter umfassend ein Ausstossen eines Spritzgussteils, wobei das Ausstossen im Wesentlichen gleichzeitig mit dem Aufbringen der elektrostatischen Ladung auf eine nachfolgende dielektrische, einen metallischen Glanz aufweisende Folie erfolgt.

13. Verwendung einer dielektrischen, einen metallischen Glanz aufweisenden Folie, zur Herstellung eines Spritzobjektes, wobei eine elektrostatische Ladung auf die dielektrische, einen metallischen Glanz aufweisenden Folie innerhalb eines Wirkungsbereichs einer Vorrichtung aufgebracht wird, und der Wirkungsbereich einen Zwischenraum zwischen einer Matrize und einem Stempel in geöffnetem Zustand definiert, insbesondere mit einer Vorrichtung gemäss Anspruch 1.

14. Verwendung gemäss Anspruch 13, wobei die dielektrische, einen metallischen Glanz aufweisenden Folie, insbesondere einer dielektrischen, einen metallischen Glanz aufweisenden Folie im Wesentlichen frei von Metallen ist.

15. Verwendung gemäss einem der Ansprüche 13 oder 14, wobei die Folie eine Dicke von zwischen 25 und 250 µm, insbesondere zwischen 50 und 200 µm, weiter insbesondere zwischen 50 und 150 µm aufweist.

16. Verwendung gemäss einem der Ansprüche 13 bis 15, wobei die Folie ein Trägermaterial aus einem Polypropylen-Kunststoff umfasst und eine Lackschicht umfasst, insbesondere eine kratzfeste Lackschicht umfasst.

17. Verwendung gemäss einem der Ansprüche 13 bis 15, wobei die Folie ein Trägermaterial aus einem Polypropylen-Kunststoff umfasst und eine Deckschicht aus einem Polypropylen-Kunststoff umfasst, insbesondere eine Deckschicht aus einer biaxial orientierten Polypropylenfolie umfasst.

18. Verwendung gemäss einem der Ansprüche 1 bis 16, wobei die dielektrische, einen metallischen Glanz aufweisenden Folie eine Oberflächenspannung von über 30, insbesondere über 40 dyn/cm aufweist.
